# FASCICULE DE BREVET EUROPEEN

(11) **EP 3 160 799 B1**
(45) Date de publication et mention de la délivrance du brevet: **15.01.2020**
(21) Numéro de dépôt: 15751049.6
(22) Date de dépôt: 30.06.2015
(51) Int. Cl.: B60R 5/04

(54) **PIÈCE DE RECOUVREMENT POUR HABITACLE DE VÉHICULE**
ABDECKUNG FÜR FAHRZEUGINNENRAUM
COVERING PART FOR VEHICLE INTERIOR

(30) Priorité: 30.06.2014 FR 1456196
(43) Date de publication de la demande: 03.05.2017
(73) Titulaire: NOVARES FRANCE, 92140 Clamart (FR)
(72) Inventeur: REICHHELD, Frédéric, 06500 Menton (FR); AILLAUD, Thierry, 06100 Nice (FR); MEIGNAN, David, 06380 Sospel (FR)
(74) Mandataire: Delorme, Nicolas
(86) Numéro de dépôt international: PCT/FR2015/051787
(87) Numéro de publication internationale: WO 2016/001570

(56) Documents cités:
- EP-A2- 1 605 132
- DE-C1- 10 218 838
- DE-C1- 19 710 787
- JP-A- 2008 273 254

## Description

La présente invention concerne une pièce de recouvrement destinée à habiller l'habitacle d'un véhicule et un véhicule équipé de cette pièce.

La face intérieure de la tôlerie des véhicules est généralement recouverte par un panneau d'habillage ayant un rôle esthétique notamment dans l'espace passager et dans le coffre, parfois une rôle acoustique, notamment dans les parties au voisinage du passage de roues, et un rôle d'intégration de différentes fonctionnalités comme la protection des occupants lors d'un choc, le réglage de la ceinture de sécurité, l'intégration de zones de préhension pour fermer les portes, etc...

Ces panneaux d'habillage sont majoritairement formés par injection plastique ou par thermoformage de matériaux thermoplastiques. Ces modes de fabrication conduisent à former des panneaux d'habillage rigides.

Or ces panneaux peuvent être de grandes tailles, de sorte que leur acheminement sur les sites de montage est rendu difficile du fait de leur encombrement.

Par ailleurs, ces panneaux étant rigides, ils ne sont pas déformables.

Ainsi, dans les espaces de rangement tel que le coffre, ces panneaux définissent un volume dont les contours sont fixes.

De plus, ces pièces doivent être écartées de la tôlerie pour éviter les vibrations sonores.

On connait, par ailleurs, par les documents DE 102 18 838, EP 1 605 132 et DE 197 10 787 des équipements amovibles qui sont des tendelets couvre-bagage. Ces tendelet couvre bagage comprennent un tendelet souple qui s'enroule et se déroule pour occulter des objets qui se trouvent dans le coffre d'un véhicule. Pour cela, le tendelet est relié à l'une de ses extrémités à un tendeur qui permet d'enrouler et de dérouler ledit tendelet en fonction de l'utilisation tandis que l'autre extrémité du tendelet vient s'accrocher de manière amovible sur des points de fixation généralement liés au véhicule.

On constate donc que la problématique du recouvrement de l'habitacle d'un véhicule n'est pas traitée de manière très satisfaisante dans l'art antérieur.

Dans ce contexte technique, la présente invention propose une pièce de recouvrement destinée à habiller un habitacle intérieur de véhicule, la pièce de recouvrement comprenant au moins une portion de fixation conformée pour fixer la pièce de recouvrement sur l'habitacle et une portion déformable définissant une surface de recouvrement fixés directement à la portion de fixation, la pièce de recouvrement étant configurée pour passer d'un premier état dans lequel la pièce de recouvrement est repliée sur elle-même à un deuxième état dans lequel la pièce de recouvrement est apte à recouvrir une surface de l'habitacle. Ainsi, grâce à cette configuration, la pièce de recouvrement peut être pliée sur elle-même de sorte à augmenter sa compacité. Elle peut alors être mieux conditionnée dans les contenants pour le transport de sorte que les coûts d'acheminement sont réduits.

De préférence, la portion déformable comprend deux bords transversaux reliés à la portion de fixation, et deux bords latéraux dépourvus de liaison à la portion de fixation. Dans cet arrangement, il est possible de plier la portion déformable dans une direction sensiblement parallèle aux bords latéraux de sorte à réduire l'encombrement global de la pièce de recouvrement.

Avantageusement, les deux bords latéraux de la portion déformable comprennent des éléments d'attache à la tôlerie de l'habitacle. Ceci permet d'attacher la pièce de recouvrement à la tôlerie tout en évitant des désagréments sonores, tel qu'un panneau rigide vibrant contre la tôlerie.

Selon l'invention la portion déformable est souple.

La portion déformable est formée en un matériau souple. Ceci permet de réduire le poids total de la pièce de recouvrement et donc de réduire les consommations de CO₂ du véhicule ainsi équipé.

Selon l'invention, la portion déformable est élastique. Ceci autorise avantageusement des déformations locales et l'adaptation de la pièce de recouvrement à des chargements dépassant légèrement le volume apparent de l'habitacle. Ceci est également avantageux pour faciliter l'adaptation dimensionnelle de ces pièces à leur environnement dans le véhicule (adaptabilité aux formes des tôles de la caisse). Ceci est enfin avantageux pour le transport d'objets qui comprennent des parties localement saillantes. Le caractère élastique de la portion déformable permet à la pièce de recouvrement de retrouver son aspect initial après déchargement. Il est ainsi possible par exemple de charger une bicyclette sans qu'une roue ou une pédale ne soit un obstacle. De façon également avantageuse, l'utilisateur peut former à l'emplacement qui lui convient une dépression formant une zone de préhension pour refermer une porte par exemple.

De préférence, la portion déformable est formée d'un matériau présentant un comportement élastique dans le domaine de température allant d'environ 23 à 80° C. En d'autres termes la portion souple est élastiquement déformable, elle reprend sa forme d'origine lorsque la contrainte appliquée disparaît.

Avantageusement, le matériau de la portion déformable est choisi de sorte à présenter une plage d'allongement comprise entre 1% et 200%. Autrement dit, cette plage d'allongement définit le domaine d'élasticité du matériau, dans lequel le matériau se déforme de façon réversible.

La portion déformable est par exemple formée d'un textile tricoté, d'un tissu ou un enduit, un élastomère de la famille des thermoplastiques élastomères ou du caoutchouc.

Selon une disposition, la liaison entre la portion déformable et la portion de fixation comprend un surmoulage, sous-moulage, soudure, collage ou un assemblage mécanique.

Selon une autre disposition, la portion de fixation comprend des moyens d'assemblage pour un assemblage sur la tôlerie de l'habitacle. Ces moyens d'assemblage sont notamment choisis parmi des moyens classiquement utilisés tels que des agrafes, des clips, des crochets ou encore des aimants.

Avantageusement, la portion de fixation est rigide. Cette portion peut ainsi former une partie ferme permettant la disposition des moyens d'assemblage suffisamment résistant pour un assemblage sur la tôle à l'intérieur de l'habitacle. Dans le présent document, on entend par matériau rigide, un matériau dont le module d'élasticité est compris entre 900 et 5000 MPa dans le domaine de température allant de 23 à 80° C.

Selon l'invention, la portion déformable comprend, sur ses bords latéraux es éléments souples d'attache à la surface d'habitacle.

De plus, les éléments d'attache latéraux peuvent comprendre des barrettes intégrant des bandes de maintien soudées, collées ou surmoulées au préalable sur les bords latéraux.

Typiquement, la portion de fixation est formée en un matériau polymérique injecté choisi parmi les polypropylènes ou les dérivés d'acrylonitrile butadiène styrène. Ces matériaux offrent la ridité suffisante pour garantir la soliditié de la fixation sur le véhicule, et assurer le maintien en place de la portion déformable.

Avantageusement, la portion de fixation intègre d'autres fonctions, tel qu'un moteur d'essui glace arrière ou une zone technique destinée à piloter d'autres fonctionnalités dans l'habitacle.

Selon une disposition, la portion déformable est formée en un matériau choisi parmi les matériaux fibreux, les élastomères thermoplastiques, le cuir et le simili cuir. Ces matériaux offrent en effet la souplesse attendue ainsi qu'une certaine élasticité.

Ainsi la présente invention propose une pièce de recouvrement permettant un transport facilité et d'utiliser l'espace de chargement au maximum.

L'invention concerne également, un véhicule comprenant un habitacle ayant au moins une surface d'habitacle, caractérisé en ce que le véhicule comprend de plus une pièce de recouvrement telle que précitée dans lequel au moins une portion de fixation étant fixée dans l'habitacle et la portion déformable étant en doublure de la paroi intérieure.

Selon une forme de réalisation, le panneau de recouvrement comprend une première portion de fixation fixée à une extrémité de la paroi intérieure et une seconde portion de fixation fixée à une seconde extrémité de la paroi intérieure, le portion de recouvrement étant en doublure de la surface d'habitacle.

Pour sa bonne compréhension, l'invention est maintenant décrite en référence aux figures ci annexées représentant, à titre d'exemple non limitatif, plusieurs formes de réalisation de l'invention.
La figure 1 illustre une vue schématique d'une pièce de recouvrement dans un premier état selon un mode de réalisation de l'invention.
La figure 2 illustre une vue schématique de plusieurs pièces de recouvrement conditionnées dans un contenant destiné au transport.
La figure 3 illustre une vue schématique d'une pièce de recouvrement dans un deuxième état selon un mode de réalisation de l'invention.
La figure 4 illustre une vue schématique de deux pièces de recouvrement fixées à un habitacle de véhicule selon un mode de réalisation de l'invention.
La figure 5 illustre des zones de préhensions possibles dans les pièces de recouvrement illustrées à la figure 4.
La figure 6 illustre une zone de préhension selon un autre mode de réalisation de l'invention.
La figure 7 illustre des pièces de recouvrement selon la présente invention fixées dans un coffre de véhicule et dans lequel des objets volumineux sont chargés.

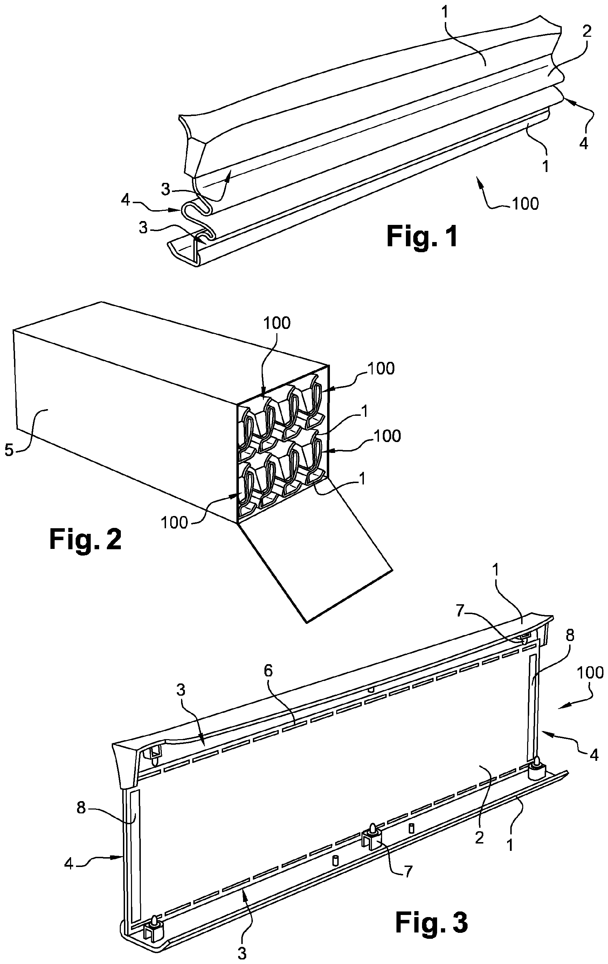

La figure 1 illustre la pièce de recouvrement 100 dans un premier état dans lequel elle est repliée sur elle-même en vue d'augmenter sa compacité, notamment pour son transport jusqu'à une usine d'assemblage. Cette pièce de recouvrement 100 comprend deux portions de fixation 1, conformées pour être fixées sur l'habitacle et une portion déformable 2 définissant une surface de recouvrement. La portion déformable 2 comprend deux bords transversaux 3 reliés chacun à une portion de fixation 1 et deux bords latéraux 4 dépourvus de liaison à la portion de fixation 1. Ceci permet à la portion déformable 2 de se plier de sorte à permettre le repliement de la pièce de recouvrement 100 pour conditionnement compact dans des caisses de transport 5 (figure 2).

Comme illustré à la figure 3, la liaison des bords transversaux 3 de la portion déformable 2 à la portion de fixation 1 est obtenue par des moyens de fixation permanents et assurant une fixation direct de la portion déformable sur la portion de fixation tel que par exemple par soudure 6. Selon des variantes de réalisation non illustrées, la liaison est obtenue par surmoulage, sous-moulage, collage ou assemblage mécanique utilisant des pions bouterollés, clips male/femelle, etc...

Les portions de fixation 1 sont rigides de sorte à former deux bords opposés de la pièce de recouvrement 100 et à maintenir la portion déformable 2 dans une position étendue, en vue du recouvrement d'une partie de l'habitacle comme illustré à la figure 3. Ces portions de fixation 1 sont formées de préférence d'un matériau polymérique moulé par injection tel qu'un polypropylène ou un Acrylonitrile Butadiène Styrène (ABS). D'autres matériaux aux propriétés équivalentes sont bien entendus utilisables. Les portions de fixation 1 comprennent par ailleurs des moyens d'assemblage 7 pour un assemblage à la tôlerie de l'habitacle tels que des agrafes, des clips, des crochets ou encore des aimants.

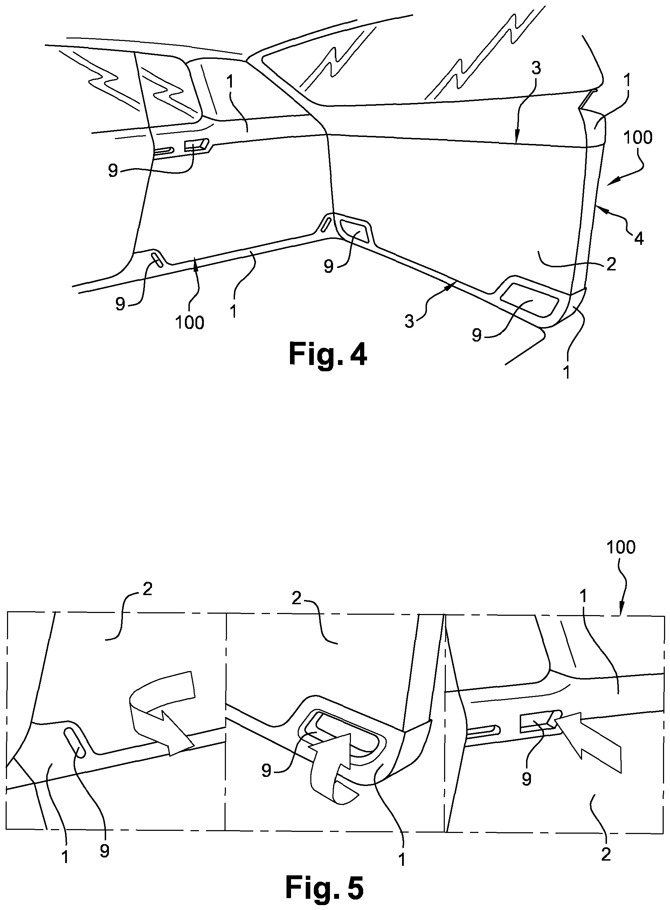

La portion déformable 2 comprend elle aussi des éléments d'attache à la tôlerie telle que des barrettes 8 intégrant des bandes de maintien soudées, collées ou surmoulées au préalable sur les bords latéraux 4 (figure 3). D'autres éléments d'attache non illustrés sont utilisables, tels que des systèmes de type velcro soudés, collés ou surmoulés ou des systèmes de type adhésifs. Selon une variante de réalisation non illustrée, les bords latéraux 4 sont libres et tendus par la fixation des portions de fixation 1 choisie de sorte à assurer un maintien de la portion déformable 2 dans une position plaquée contre la tôlerie (figure 4). Grâce à cette configuration, la pièce de recouvrement 100 passe de son premier état replié à un deuxième état apte à recouvrir une partie de l'habitacle.

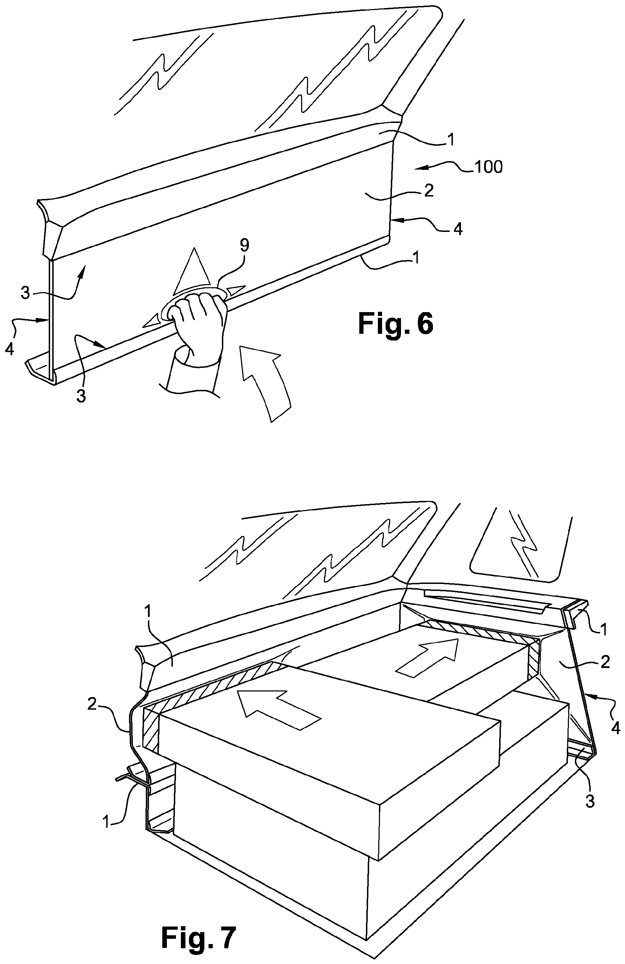

Comme illustré aux figures 5 à 7, la portion déformable 2 est élastique, elle est notamment formée en un matériau choisi parmi les matériaux fibreux, les élastomères thermoplastiques, le cuir ou le simili cuir. La pièce de recouvrement 100 est ainsi adaptée pour se conformer de façon réversible sous l'application de contraintes. L'origine de ces contraintes peut provenir de la préhension d'un utilisateur, par exemple pour former une poignée de porte d'un coffre. Une zone de préhension 9 peut être ainsi formée en tout point de la portion déformable, assurant un usage pratique à un utilisateur. De même, cette capacité à la déformation élastique permet une adaptation à des volumes comprenant des parties en saillies pour offrir un espace de chargement maximal, tout en conservant un aspect sobre, sans parties marquées ou creusées irréversibles, nécessaires dans les habillages rigides de l'art antérieur.

Ainsi la présente invention propose une pièce de recouvrement 100 destinée à habiller un habitacle qui facilite le transport et permet de former des zones de préhension 9 à l'envie, de réduire les vibrations sonores et de s'adapter localement à des parties saillantes des objets transportés par une déformation élastique réversible.

## Revendications

1. Pièce de recouvrement (100) destinée à habiller un habitacle intérieur de véhicule, la pièce de recouvrement (100) comprenant deux portions de fixation (1) opposées conformées pour fixer la pièce de recouvrement (100) sur l'habitacle et une portion déformable (2) définissant une surface de recouvrement fixées directement à la portion de fixation (1) la portion déformable (2) comprenant, sur ses bords latéraux (4), des éléments souples d'attache à la surface d'habitacle, la pièce de recouvrement (100) étant configurée pour passer d'un premier état dans lequel la pièce de recouvrement (100) est repliée sur elle-même à un deuxième état dans lequel la pièce de recouvrement (100) est apte à recouvrir une surface de l'habitacle, dans laquelle la portion déformable (2) est élastique.

2. Pièce de recouvrement (100) selon la revendication 1, dans laquelle la portion déformable (2) comprend deux bords transversaux (3) reliés à la portion de fixation (1), et deux bords latéraux (4) dépourvus de liaison à la portion de fixation (1).

3. Pièce de recouvrement (100) selon la revendication 2, dans laquelle les deux bords latéraux (4) de la portion déformable (2) comprennent des éléments d'attache à la surface de l'habitacle.

4. Pièce de recouvrement (100) selon l'une des revendications 1 à 3, dans laquelle la liaison entre la portion déformable (2) et la portion de fixation (1) comprend un surmoulage, sous-moulage, soudure (6), collage ou un assemblage mécanique.

5. Pièce de recouvrement (100) selon l'une des revendications 1 à 4, dans laquelle la portion de fixation (1) comprend des moyens d'assemblage (7) pour un assemblage sur la surface de l'habitacle.

6. Pièce de recouvrement (100) selon l'une des revendications 1 à 5, dans laquelle la portion de fixation (1) est rigide.

7. Pièce de recouvrement (100) selon la revendication 6, **caractérisé en ce que** les éléments d'attache latéraux (4) comprennent des barrettes (8) intégrant des bandes de maintien soudées, collées ou surmoulées au préalable sur les bords latéraux (4).

8. Pièce de recouvrement (100) selon l'une des revendications 1 à 7, dans laquelle la portion de fixation (1) est formée en un matériau polymérique injecté choisi parmi les polypropylènes ou les dérivés d'acrylonitrile butadiène styrène.

9. Pièce de recouvrement (100) selon l'une des revendications 1 à 8, dans laquelle la portion déformable (2) est formée en un matériau choisi parmi les matériaux fibreux, les élastomères thermoplastiques, le cuir et le simili cuir.

10. Véhicule comprenant un habitacle ayant au moins une paroi intérieure, **caractérisé en ce que** le véhicule comprend de plus une pièce de recouvrement (100) selon l'une des revendications 1 à 9, les deux portions de fixation (1) de ladite pièce de recouvrement (100) étant fixées dans l'habitacle et la portion déformable (2) de ladite pièce de recouvrement (100) étant en doublure de la paroi intérieure.

11. Véhicule selon la revendication 10, **caractérisé en ce que** la pièce de recouvrement (100) comprend une première portion de fixation fixée à une extrémité de la paroi intérieure et une seconde portion de fixation fixée à une seconde extrémité de la paroi intérieure.

## Patentansprüche

1. Abdeckung (100), die zur Verkleidung eines Fahrzeuginnenraums bestimmt ist, wobei die Abdeckung (100) zwei gegenüberliegende Befestigungsabschnitte (1) umfasst, die ausgebildet sind, um die Abdeckung (100) auf dem Innenraum zu befestigen, und einen verformbaren Abschnitt (2), der eine Abdeckungsoberfläche definiert, die direkt am Befestigungsabschnitt (1) befestigt sind, wobei der verformbare Abschnitt (2) auf seinen Seitenrändern (4) flexible Anbringungselemente an der Oberfläche des Innenraums umfasst, wobei die Abdeckung (100) konfiguriert ist, um aus einem ersten Zustand, in welchem die Abdeckung (100) in sich zusammengefaltet ist, in einen zweiten Zustand zu wechseln, in welchem die Abdeckung (100) imstande ist, eine Oberfläche des Innenraums zu abzudecken, wobei der verformbare Abschnitt (2) elastisch ist.

2. Abdeckung (100) nach Anspruch 1, wobei der verformbare Abschnitt (2) zwei transversale Ränder (3) umfasst, die mit dem Befestigungsabschnitt (1) verbunden sind, und zwei Seitenränder (4) ohne Verbindung mit dem Befestigungsabschnitt (1).

3. Abdeckung (100) nach Anspruch 2, wobei die zwei Seitenränder (4) des verformbaren Abschnitts (2) Anbringungselemente an der Oberfläche des Innenraums umfassen.

4. Abdeckung (100) nach einem der Ansprüche 1 bis 3, wobei die Verbindung zwischen dem verformbaren Abschnitt (2) und dem Befestigungsabschnitt (1) eine Aufformung, Unterformung, Verschweißung (6), Verklebung oder mechanische Verbindung umfasst.

5. Abdeckung (100) nach einem der Ansprüche 1 bis 4, wobei der Befestigungsabschnitt (1) Verbindungsmittel (7) für eine Verbindung auf der Oberfläche des Innenraums umfasst.

6. Abdeckung (100) nach einem der Ansprüche 1 bis 5, wobei der Befestigungsabschnitt (1) starr ist.

7. Abdeckung (100) nach Anspruch 6, **dadurch gekennzeichnet, dass** die seitlichen Anbringungselemente (4) Stäbe (8) umfassen, die zuvor auf den Seitenrändern (4) geschweißte, geklebte oder aufgeformte Haltestreifen integrieren.

8. Abdeckung (100) nach einem der Ansprüche 1 bis 7, wobei der Befestigungsabschnitt (1) aus einem eingespritzten Polymermaterial gebildet ist, das aus den Polypropylenen oder den Derivaten von Acrylnitrilbutadienstyrol gebildet ist.

9. Abdeckung (100) nach einem der Ansprüche 1 bis 8, wobei der verformbare Abschnitt (2) aus einem Material gebildet ist, das aus den Fasermaterialien, den thermoplastischen Elastomeren, dem Leder und dem Kunstleder ausgewählt ist.

10. Fahrzeug, umfassend einen Innenraum mit mindestens einer Innenwand, **dadurch gekennzeichnet, dass** das Fahrzeug weiterhin eine Abdeckung (100) nach einem der Ansprüche 1 bis 9 umfasst, wobei die zwei Befestigungsabschnitte (1) der Abdeckung (100) im Innenraum befestigt sind und der verformbare Abschnitt (2) der Abdeckung (100) als Futter der Innenwand vorliegt.

11. Fahrzeug nach Anspruch 10, **dadurch gekennzeichnet, dass** die Abdeckung (100) einen ersten Befestigungsabschnitt umfasst, der an einem Ende der Innenwand befestigt ist, und einen zweiten Befestigungsabschnitt, der an einem zweiten Ende der Innenwand befestigt ist.

## Claims

1. A covering part (100) intended to clad an interior passenger compartment of a vehicle, the covering part (100) comprising two opposite fastening portions (1) shaped so as to fasten the covering part (100) on the passenger compartment and a deformable portion (2) defining a covering surface directly fastened to the fastening portion (1), the deformable portion (2) comprising, on its lateral edges (4), flexible elements for attachment to the passenger compartment surface, the covering part (100) being configured to switch from a first state in which the covering part (100) is folded back on itself to a second state in which the covering part (100) is adapted to cover a surface of the passenger compartment, in which the deformable portion (2) is elastic.

2. The covering part (100) according to claim 1, wherein the deformable portion (2) comprises two transverse edges (3) connected to the fastening portion (1), and two lateral edges (4) devoid of connection to the fastening portion (1).

3. The covering part (100) according to claim 2, wherein the two lateral edges (4) of the deformable portion (2) comprise elements for attachment to the surface of the passenger compartment.

4. The covering part (100) according to any of claims 1 to 3, wherein the connection between the deformable portion (2) and the fastening portion (1) comprises an overmolding, sub-molding, welding (6), gluing or a mechanical assembly.

5. The covering part (100) according to any of claims 1 to 4, wherein the fastening portion (1) comprises assembly means (7) for an assembly on the surface of the passenger compartment.

6. The covering part (100) according to any of claims 1 to 5, wherein the fastening portion (1) is rigid.

7. The covering part (100) according to claim 6, **characterized in that** the lateral attachment elements (4) comprise bars (8) embedding holding strips welded, glued or overmolded beforehand on the lateral edges (4).

8. The covering part (100) according to any of claims 1 to 7, wherein the fastening portion (1) is made of an injected polymeric material selected from polypropylenes or acrylonitrile butadiene styrene derivatives.

9. The covering part (100) according to any of claims 1 to 8, wherein the deformable portion (2) is made of a material selected from fibrous materials, thermoplastic elastomers, leather and imitation leather.

10. A vehicle comprising a passenger compartment having at least one internal wall, **characterized in that** the vehicle further comprises a covering part (100) according to any of claims 1 to 9, the two fastening portions (1) of said covering part (100) being fastened in the passenger compartment and the deformable portion (2) of said covering part (100) being in lining of the internal wall.

11. The vehicle according to claim 10, **characterized in that** the covering part (100) comprises a first fastening portion fastened to one end of the internal wall and a second fastening portion fastened to a second end of the internal wall.
